# EUROPÄISCHE PATENTSCHRIFT

(11) **EP 0 570 018 B1**
(45) Veröffentlichungstag und Bekanntmachung des Hinweises auf die Patenterteilung: **08.01.1997**
(21) Anmeldenummer: 93109622.6
(22) Anmeldetag: 25.07.1989
(51) Int. Cl.: B65D 65/46

(54) **Verpackungsteil**
Packaging element
Elément d'emballage

(30) Priorität: 08.08.1988 DE 8811376 U
(43) Veröffentlichungstag der Anmeldung: 18.11.1993
(62) Teilanmeldung aus: 89113737.4
(73) Patentinhaber: Kakuk, Stefan, D-68794 Oberhausen-Rheinhausen (DE)
(72) Erfinder: Kakuk, Stefan, D-68794 Oberhausen-Rheinhausen (DE)
(74) Vertreter: Schmid, Rudolf, Dipl.-Ing., Patentanwalt

(56) Entgegenhaltungen:
- GB-A- 2 183 597
- US-A- 3 255 911

## Beschreibung

Die Erfindung betrifft ein Verpackungsteil aus biologischem Material, nämlich verpreßtem Stroh und/oder Heu in Form von Behältern, Schalen, Kanten- oder Eckschutz bzw. Auffüllmaterial, wobei das geformte Verpackungsteil zum Zwecke der Farb- oder Beschriftungsaufnahme eine Beschichtung aufweist.

Zum Versand von Handelsgütern aller Art werden zum Schutze gegen Beschädigung während des Transports Verpackungsmaterialien aus Kunststoff, wie z.B. "Styropor" oder ähnliches verwendet.

Neben diesen Materialien werde auch Holz bzw. Pappe als Behälter verwendet.
Das heute verwendete Verpackungsmaterial, sollte wegen der späteren Beseitigung und der großen Umweltbelastung biologisch abbaubar sein und aus biologischen Stoffen hergestellt werden.
Der riesige und immer steigende Bedarf an Verpackungsmaterialien, sollte aus den in der Natur in großen Mengen vorkommenden Rohstoffen hergestellt werden. Durch großen Verbrauch von diesem Rohstoff soll andererseits die Natur nicht zerstört werden, wie z.B. durch Abholzen von Wäldern.

Die heute verwendete Verpackung muß auch zeitgemäß sein. Einfaches Verpackungsmaterial wie Strohgeflecht oder loses Stroh, erfüllt heute nicht mehr dengeforderten Zweck.

Alle diese Anforderungen werden von dem bisher bekannten Verpackungsmaterial meist nicht oder nur teilweise erfüllt.

Zum nächstkommenden Stand der Technik ist die EP-A-0 269 990 zu nennen, die eine Leichtbauplatte und einen Bausatz aus Leichtbauteilen zur Errichtung von Wänden, Stützen, Decken, Verkleidungen, u.ä. betrifft. Diese Bauteile und Leichtbauplatten bestehen aus vorbehandeltem Stroh und Bindemittel. Die Vorbehandlung besteht in Form einer Behandlung mit Mitteln, die eine schwere Entflammbarkeit, Wasserabweisung, Wasserfestigkeit und weitere Eigenschaften bewirken, die gemäß bautechnischer Vorschriften von Bauelementen verlangt werden. Überdies werden die fertiggestellten Bauelementen mit bekannten Beschichtungen versehen, wie sie auch auf Holz und Kunststoff aufgebracht werden.

Der Erfindung liegt nun die Aufgabe zugrunde ein Verpackungsteil der eingangs genannten Gattung zu schaffen, das in der Lage ist, die heutigen Anforderungen an Verpackungsteile zu erfüllen, die von den Verpackungsteilen des Standes der Technik nicht erfüllt werden konnten. Diese Aufgabe wird dadurch gelöst, daß bei einem Verpackungsteil der eingangs genannten Gattung das Stroh und/oder Heu ohne Beimischung von Kleber bzw. Bindemitteln verpreßt ist.

Die erfindungsgemäßen Verpackungsteile sind ausreichend fest, um die zu verpackende Ware zu schützen. Die Oberfläche der Verpackungsteile ist glatt, wobei die Außenoberfläche mit x-beliebigem Muster, Rillen oder durchgehenden Löchern bzw. Bohrungen versehen werden kann.

Die erfindungsgemäßen Verpackungsteile können nach ihrem Gebrauch als Brennstoff oder aufgeweicht als Düngemittel verwendet werden.

Durch gepreßtes Stroh oder Heu sind diese Verpackungsteile absolut biologisch und in keiner Weise umweltbelastend.
Durch großes Vorkommen in der Natur ist Stroh und Heu ein Abfallprodukt, dessen Beseitigung, in welcher Form auch immer, bisher größtenteils sinnlos und belastend war.

Die Herstellung von diesen Verpackungsteilen erfolgt durch Verpressung von aufgeweichtem bzw. aufbereitetem Stroh und Heu, ohne Beimischung von Kleber, bzw. Bindemittel.

Besondere Ausführungsformen sind in den beigefügten Zeichnungen dargestellt und werden nun näher erläutert.

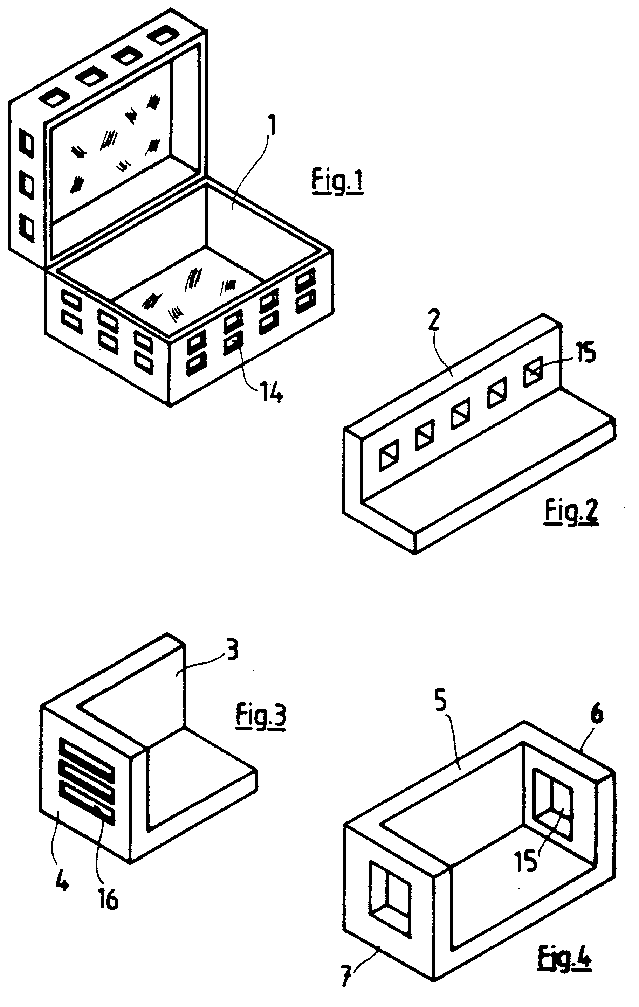

Figur 1 zeigt eine Schachtel oder einen Behälter 1, mit eingepreßten Vertiefungen 14.

Die Figur 2 zeigt einen winkelförmigen Kantenschutz 2 mit durchgehenden Löchern und/oder Bohrungen 15.

Solche Aussparungen, wie diese Bohrungen 15, sind insbesondere aus Gewichtsgründen in die Verpackungsteile eingearbeitet.

Die Figur 3 zeigt einen winkelförmigen Eckschutz 3 mit an einer Stirnseite angeordneten Wandung 4.

In diesem Ausführungsbeispiel sind in der Wandung 4 eingepreßte Rillen 16 angeordnet.

Die Figur 4 zeigt eine winkelförmige Schale 5 mit an beiden Stirnseiten angeordneten Wandungen 6 und 7. Auch hier können, wie in dieser Abbildung angedeutet ist, Materialaussparungen in Form von Löchern oder Bohrungen 15 eingearbeitet werden.

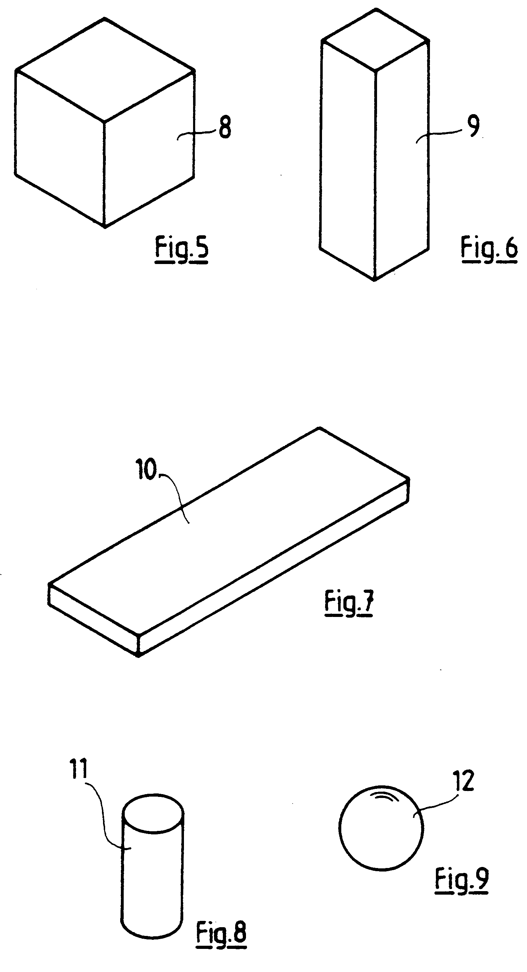

Die Figur 5 zeigt ein würfelförmiges Verpackungsteil 8, die Figur 6 ein Verpackungsteil mit der Form eines Vierkantstabes 9 und Figur 7 ein Verpackungsteil in der Form einer Platte 10.

Die Figur 8 zeigt ein zylinderförmiges Verpackungsteil 11.

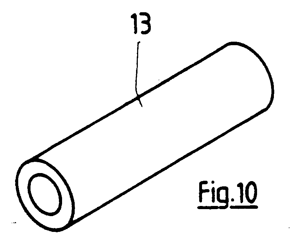

Figur 9 zeigt ein kugelförmiges Verpackungsteil 12, das in dieser Form vorzugsweise als Auffüllmaterial Anwendung findet.

Figur 10 zeigt das Verpackungsteil in Form eines Rohres 13. Diese Formgebung findet zur Verpackung von Glaskörpern, Leuchtstoffröhren aber auch für Isolationszwecke Anwendung.

Das Verpackungsteil ist mit einer Beschichtung versehen, die eine Farbe, Beschriftung oder sonstiges aufnehmen kann. Durch die Verwendung von Stroh und Heu für Verpackungsteile wird dieses bisher weitgehend überflüssige Naturprodukt, die Umweltbelastung durch Kunststoffe und Ausbeutung von Holz und ähnlichen Rohstoffen wesentlich reduzieren.

## Patentansprüche

1. Verpackungsteil aus biologischem Material, nämlich verpreßtem Stroh und/oder Heu in Form von Behältern, Schalen, Kanten- oder Eckschutz bzw. Auffüllmaterial, wobei das geformte Verpackungsteil zum Zwecke der Farb- oder Beschriftungsaufnahme eine Beschichtung aufweist,
dadurch gekennzeichnet,
daß das Stroh und/oder Heu ohne Beimischung von Kleber bzw. Bindemitteln verpreßt ist.

## Claims

1. Packaging element made of biological material, precisely compressed straw and/or hay, in the form of containers, bowls, edge or corner protections, or used as filling material, with a coating being applied onto the molded packaging element suited to receive a dye or an inscription,
wherein
the straw and/or hay is compressed without any addition of adhesives or binders.

## Revendications

1. Emballage en matériel biologique, à savoir en paille et/ou en foin pressés sous forme de contenants, enveloppes, bordures de protection, protège-angles ou matériau de remplissage, où l'emballage formé présente une couche superficielle en vue de permettre la peinture et l'impression de caractères, caractérisé en ce que la paille et/ou le foin sont pressés sans ajout de colle ou liants.
